# EUROPEAN PATENT APPLICATION

(11) **EP 4 588 943 A1**
(43) Date of publication of application: **23.07.2025**
(21) Application number: 23865347.1
(22) Date of filing: 04.09.2023
(51) Int. Cl.: C08F 8/34, C08G 75/16, H01M 4/40, H01M 4/60, H01M 10/052

(54) **SULFUR-CONTAINING MATERIAL, SULFUR-CONTAINING BATTERY MATERIAL, ELECTRODE AND BATTERY**

(30) Priority: 15.09.2022 JP 2022146838
(71) Applicant: ADEKA CORPORATION, Arakawa-ku Tokyo 116-8554 (JP)
(72) Inventor: KAKIAGE, Kenji, Tokyo 116-8554 (JP); YANO, Toru, Tokyo 116-8554 (JP)
(74) Representative: Müller-Boré & Partner Patentanwälte PartG mbB
(86) International application number: PCT/JP2023/032274
(87) International publication number: WO 2024/057992

(57) **Abstract**

Provided is a sulfur-containing material including a sulfur-modified compound, wherein the sulfur-containing material has a total content of sulfur of 50 mass% or more, and a ratio (A/B) of a maximum peak intensity (A) at a diffraction angle (2θ) that falls within a range of from 23.0° to 23.4° to a maximum peak intensity (B) at a diffraction angle (2θ) that falls within a range of from 24.8° to 25.2°, the ratio being obtained in powder X-ray diffraction using a CuKα ray, of 1.5 or less (A/B≤1.5).

## Description

### Technical Field

This disclosure relates to a sulfur-containing material, a sulfur-containing battery material, an electrode, and a battery.

### Background Art

A battery is used for various applications. The characteristics of the battery depend on an electrode, a separator, an electrolyte, and the like serving as constituent member of the battery, and research and development have been actively made on the respective constituent members. In the electrode, an active material in an electrode layer is important as well as a binder, a current collector material, and the like, and research and development have been actively made on the active material. For example, a sulfur-containing material is known as the active material (see, for example, Patent Documents 1 and 2).

### Citation List

### Patent Document

Patent Document 1: WO 2010/044437 A1
Patent Document 2: JP 2014-022123 A

### Summary of Invention

### Technical Problem

In the sulfur-containing material to be used in Patent Document 1 or the like, a material capable of forming a battery having a larger discharge capacity is required.

This disclosure has been made in view of the above-mentioned problem, and a primary object of this disclosure is to provide a sulfur-containing material capable of easily increasing a discharge capacity.

### Solution to Problem

The inventors of the present invention have made extensive investigations, and as a result, have found that the above-mentioned problem can be solved by a sulfur-containing material including a sulfur-modified compound, in which the sulfur-containing material has a specific total content of sulfur, and in which measurement values of powder X-ray diffraction using a CuKα ray satisfy a predetermined condition.

That is, this disclosure is directed to a sulfur-containing material including a sulfur-modified compound, wherein the sulfur-containing material has a total content of sulfur of 50 mass% or more, and a ratio (A/B) of a maximum peak intensity (A) at a diffraction angle (2θ) that falls within a range of from 23.0° to 23.4° to a maximum peak intensity (B) at a diffraction angle (2θ) that falls within a range of from 24.8° to 25.2°, the ratio being obtained in powder X-ray diffraction using a CuKα ray, of 1.5 or less (A/B≤1.5).

It is preferred that, in the sulfur-containing material of this disclosure, the sulfur-modified compound be a sulfur-modified acrylic compound.

This disclosure is directed to a sulfur-containing battery material including a sulfur-modified compound, wherein the sulfur-containing battery material has a total content of sulfur of 50 mass% or more, and a ratio (A/B) of a maximum peak intensity (A) at a diffraction angle (2θ) that falls within a range of from 23.0° to 23.4° to a maximum peak intensity (B) at a diffraction angle (2θ) that falls within a range of from 24.8° to 25.2°, the ratio being obtained in powder X-ray diffraction using a CuKα ray, of 1.5 or less (A/B≤1.5).

It is preferred that, in the sulfur-containing battery material of this disclosure, the sulfur-modified compound be a sulfur-modified acrylic compound.

This disclosure is directed to an electrode including an electrode layer containing the above-mentioned sulfur-containing material.

This disclosure is directed to a battery including the above-mentioned electrode.

It is preferred that, in the battery of this disclosure, the electrode be a positive electrode.

It is preferred that the battery of this disclosure include a negative electrode formed of lithium.

### Advantageous Effects of Invention

According to this disclosure, the sulfur-containing material capable of easily increasing a discharge capacity can be provided.

### Brief Description of Drawings

FIG. 1 is an example of a Raman spectrum of a sulfur-containing material A.
FIG. 2 shows a measurement result of powder X-ray diffraction of the sulfur-containing material A.
FIG. 3 shows a measurement result of powder X-ray diffraction of a sulfur-containing material "b".

### Description of Embodiments

A sulfur-containing material, a sulfur-containing battery material, an electrode, and a battery of this disclosure are described in detail.

### A. Sulfur-containing Material

First, the sulfur-containing material of this disclosure is described.

The sulfur-containing material of this disclosure is a sulfur-containing material including a sulfur-modified compound, wherein the sulfur-containing material has a total content of sulfur of 50 mass% or more, and a ratio (A/B) of a maximum peak intensity (A) at a diffraction angle (2θ) that falls within the range of from 23.0° to 23.4° to a maximum peak intensity (B) at a diffraction angle (2θ) that falls within the range of from 24.8° to 25.2°, the ratio being obtained in powder X-ray diffraction using a CuKα ray, of 1.5 or less (A/B≤1.5).

The sulfur-containing material of this disclosure is a material including at least the sulfur-modified compound. That is, the sulfur-containing material may be, for example, a material including the sulfur-modified compound, elemental sulfur, and impurities.

In this disclosure, the elemental sulfur may be sulfur that does not form a stable interaction with the sulfur-modified compound. Specific examples of the elemental sulfur include, but not particularly limited to, α-sulfur, β-sulfur, and γ-sulfur each having a S₈ structure.

According to this disclosure, when the sulfur-containing material is used for a battery, a discharge capacity is increased, and the discharge capacity is hardly reduced even through repeated charge and discharge, that is, a cycle characteristic is improved. In addition, the sulfur-containing material of this disclosure is excellent in flame retardancy, and hence the safety of the battery can be improved.

Although the reason why such effects are exhibited through use of the sulfur-containing material of this disclosure is not clear, the reason is assumed to be as described below.

When the total content of sulfur having a theoretical capacity of about 1,670 mAh/g is 50 mass% or more, the discharge capacity is increased. In addition, it is assumed that the sulfur to be incorporated into the sulfur-containing material has a large ratio of organic sulfur because a predetermined relationship between peak intensities obtained in the powder X-ray diffraction is satisfied.

Herein, the organic sulfur is different from the elemental sulfur, and may be, for example, sulfur that forms a stable interaction in the sulfur-modified compound or sulfur that forms a stable interaction with the sulfur-modified compound. As a result of an increase in ratio of such organic sulfur, for example, at the time of charge and discharge, reactivity between sulfur and lithium is improved, and further, elution of lithium polysulfide and a side reaction are suppressed, and hence an increase in discharge capacity can be effectively achieved. In addition, an improving effect on the cycle characteristic can be exhibited. Further, when a ratio of the elemental sulfur in the sulfur to be incorporated into the sulfur-containing material is small, flammability is suppressed, and hence an improving effect on the safety of the battery can be exhibited at the same time.

The organic sulfur may be formed of one sulfur atom that forms a stable interaction, or may be formed of a plurality of sulfur atoms, such as a disulfide or a trisulfide. When a plurality of sulfur atoms are present, part of the sulfur atoms only need to interact with each other, and for example, when the sulfur is linear, the sulfur atom on at least one end may form a stable interaction.

In addition, the stable interaction is, for example, an interaction that does not produce a diffraction peak resulting from the elemental sulfur in the powder X-ray diffraction using a CuKα ray, more specifically, an interaction that does not produce a strong diffraction peak at a diffraction angle (2θ) around 23.2° (within the range of, for example, from 23.0° to 23.4°), and examples thereof include a covalent bond and an ionic bond.

### 1. Diffraction Peak

The sulfur-containing material of this disclosure satisfies such a relationship that a ratio (A/B) of a maximum peak intensity (A) at a diffraction angle (2θ) that falls within the range of from 23.0° to 23.4° to a maximum peak intensity (B) at a diffraction angle (2θ) that falls within the range of from 24.8° to 25.2°, the ratio being obtained in powder X-ray diffraction using a CuKα ray, is 1.5 or less (A/B≤1.5).

In this disclosure, the powder X-ray diffraction using a CuKα ray has only to be an analysis method for obtaining information on the structure or phase identification of a crystal substance. The measurement is not particularly limited, and may be performed with, for example, Ultima IV (voltage: 40 kV, current: 40 mA, scan speed: 0.5°/min, sampling: 0.02°, number of scans: once, diffraction angle (2θ): from 10° to 40°) manufactured by Rigaku Corporation.

In this disclosure, the "maximum peak intensity (A) at a diffraction angle (2θ) that falls within the range of from 23.0° to 23.4°" refers to a difference between a maximum value I(A-max) of diffraction intensities (cps) measured within the range of from 23.0° to 23.4° and a minimum value I(min) of diffraction intensities (cps) measured within the range of from 20.0° to 40.0°. In other words, (A)=I(A-max)-I(min) is satisfied.

In addition, the "maximum peak intensity (B) at a diffraction angle (2θ) that falls within the range of from 24.8° to 25.2°" refers to a difference between a maximum value I(B-max) of diffraction intensities (cps) measured within the range of from 24.8° to 25.2° and the minimum value I(min) of diffraction intensities (cps) measured within the range of from 20.0° to 40.0°. In other words, (B)=I(B-max)-I(min) is satisfied.

In this disclosure, the peak intensity ratio (A/B) is preferably 1.4 or less (A/B≤1.4), more preferably 1.2 or less (A/B≤1.2), still more preferably 1.0 or less (A/B≤1.0) from the viewpoints of improving the cycle characteristic and further improving the safety of the battery while increasing the discharge capacity.

In this disclosure, a method of adjusting the peak intensity ratio (A/B) is, for example, a method of adjusting the conditions of the respective steps in a method of producing the sulfur-containing material to be described later. In particular, the method is, for example, a method including: using a method including a mechanochemical treatment step together with a heating step as the production method; and adjusting the conditions of mechanochemical treatment in the mechanochemical treatment step, or adjusting the content of the elemental sulfur in a heat-treated product to be subjected to the mechanochemical treatment. Specifically, the peak intensity ratio (A/B) can be reduced by increasing the treatment time, by increasing the rotation speed of a planetary ball mill to be used in the mechanochemical treatment, or by performing both thereof.

### 2. Total Content of Sulfur

The sulfur-containing material of this disclosure has a total content of sulfur of 50 mass% or more. Herein, the "total content of sulfur" refers to the total content of sulfur atoms. The total content of sulfur in the sulfur-containing material may be calculated from the results of analysis with a CHNS analyzer capable of analyzing sulfur and oxygen.

The total content of sulfur in the sulfur-containing material of this disclosure is preferably from 50 mass% to 90 mass%, preferably from 51 mass% to 85 mass%, more preferably from 52 mass% to 80 mass%, still more preferably from 53 mass% to 75 mass%, still more preferably from 53 mass% to 70 mass%, most preferably from 55 mass% to 70 mass% from the viewpoint that the discharge capacity is further increased.

### 3. Sulfur-modified Compound

For example, a compound in which a sulfur atom and an atom in an organic compound are covalently bonded to each other may be used as the sulfur-modified compound to be used for the sulfur-containing material of this disclosure. As a method of producing such sulfur-modified compound, there is given, for example, a method including heating elemental sulfur and the organic compound.

Examples of the organic compound include an acrylic compound, a polyether compound, a pitch compound, a polynuclear aromatic compound, an aliphatic hydrocarbon compound, and a thienoacene compound.

That is, examples of the sulfur-modified compound include a sulfur-modified acrylic compound, a sulfur-modified polyether compound, a sulfur-modified pitch compound, a sulfur-modified polynuclear aromatic compound, a sulfur-modified aliphatic hydrocarbon compound, a polythienoacene compound, and carbon polysulfide.

In this disclosure, the sulfur-modified compound is preferably selected from the group consisting of: a sulfur-modified acrylic compound; a sulfur-modified polynuclear aromatic compound; and a sulfur-modified polyether compound, and is more preferably a sulfur-modified acrylic compound from the viewpoints that the discharge capacity is further increased and the safety of the battery is further improved.

The total content of sulfur in the sulfur-modified compound is not particularly limited, but is preferably from 30 mass% to 80 mass%, more preferably from 40 mass% to 75 mass%, most preferably from 45 mass% to 70 mass% from the viewpoint that the discharge capacity is further increased. Herein, the total content of sulfur in the sulfur-modified compound may be calculated from the results of analysis with a CHNS analyzer capable of analyzing sulfur and oxygen.

In this disclosure, the sulfur-modified compound is preferably incorporated at 70 parts by mass or more into 100 parts by mass of the sulfur-containing material, is more preferably incorporated at 75 parts by mass or more thereinto, is still more preferably incorporated at 80 parts by mass or more thereinto, is still more preferably 90 parts by mass or more thereinto, is still more preferably incorporated at 95 parts by mass or more thereinto, and is even still more preferably incorporated at 98 parts by mass or more thereinto from the viewpoints that the discharge capacity is increased, and the safety is improved by a reduction in flammability.

In this disclosure, the content of the sulfur-modified compound may be measured by a known method. The content of the sulfur-modified compound may be measured by, for example, subjecting the sulfur-containing material to thermogravimetric analysis. In the thermogravimetric analysis, the content of the sulfur-modified compound in the sulfur-containing material may be measured by measuring a thermal weight loss retention rate until a temperature reaches 350°C under such conditions that a heating start temperature is set to 100°C or less, and a temperature increase rate is set to a constant rate of 10°C/min to determine the content ratio (mass%) of a residual substance.

### (1) Sulfur-modified Acrylic Compound

For example, a compound in which a sulfur atom and an atom in an acrylic compound are covalently bonded to each other may be used as the sulfur-modified acrylic compound to be used for the sulfur-containing material of this disclosure. As a method of producing such sulfur-modified acrylic compound, there is given, for example, a method including heating elemental sulfur and the acrylic compound.

In this disclosure, examples of the acrylic compound include a polyacrylonitrile-based compound and other acrylic compounds.

In this disclosure, examples of the sulfur-modified acrylic compound include a sulfur-modified polyacrylonitrile-based compound and other sulfur-modified acrylic compounds. The sulfur-modified acrylic compound is preferably a sulfur-modified polyacrylonitrile-based compound from the viewpoint that the discharge capacity is increased.

The total content of sulfur in the sulfur-modified acrylic compound is not particularly limited, but is preferably from 30 mass% to 80 mass%, more preferably from 40 mass% to 75 mass%, most preferably from 45 mass% to 70 mass% from the viewpoint that the discharge capacity is further increased. Herein, the total content of sulfur in the sulfur-modified acrylic compound may be calculated from the results of analysis with a CHNS analyzer capable of analyzing sulfur and oxygen.

### (1-1) Sulfur-modified Polyacrylonitrile-based Compound

For example, a compound in which a sulfur atom and an atom in a polyacrylonitrile-based compound are covalently bonded to each other may be used as the sulfur-modified polyacrylonitrile-based compound of this disclosure. As a method of producing such sulfur-modified polyacrylonitrile-based compound, there is given, for example, a method including heating elemental sulfur and the polyacrylonitrile-based compound. In addition, the sulfur-modified polyacrylonitrile-based compound in this disclosure may contain a compound obtained by a method including heating particles and the elemental sulfur, wherein the particles are obtained by incorporating a hydrocarbon into an outer shell formed of the polyacrylonitrile-based compound. The hydrocarbon to be incorporated may be a saturated or unsaturated aliphatic hydrocarbon having 3 to 8 carbon atoms.

In this disclosure, the polyacrylonitrile-based compound has only to be a compound containing a constituent unit derived from at least one of acrylonitrile or methacrylonitrile. The polyacrylonitrile-based compound preferably contains at least the constituent unit derived from acrylonitrile from the viewpoint that the discharge capacity is increased.

The content of the constituent units derived from acrylonitrile and methacrylonitrile in 100 parts by mass of the polyacrylonitrile-based compound is preferably 10 parts by mass or more, more preferably 30 parts by mass or more from the viewpoint that the discharge capacity is increased.

When the polyacrylonitrile-based compound contains the constituent unit derived from acrylonitrile, from the viewpoint that the discharge capacity is increased, the content of the constituent unit derived from acrylonitrile in 100 parts by mass of the polyacrylonitrile-based compound is preferably 10 parts by mass or more, more preferably 30 parts by mass or more, still more preferably 50 parts by mass or more, still more preferably 80 parts by mass or more, still more preferably 85 parts by mass or more, still more preferably 90 parts by mass or more, still more preferably 95 parts by mass or more, most preferably 100 parts by mass, that is, it is most preferred that the polyacrylonitrile-based compound be formed only of the constituent unit derived from acrylonitrile.

When the polyacrylonitrile-based compound contains the constituent unit derived from methacrylonitrile, from the viewpoint that the discharge capacity is increased, the content of the constituent unit derived from methacrylonitrile in 100 parts by mass of the polyacrylonitrile-based compound is preferably 10 parts by mass or more, more preferably 30 parts by mass or more, still more preferably 30 parts by mass or more and 95 parts by mass or less, still more preferably 30 parts by mass or more and 90 parts by mass or less, still more preferably 30 parts by mass or more and 85 parts by mass or less, even still more preferably 30 parts by mass or more and 80 parts by mass or less.

The polyacrylonitrile-based compound may contain a constituent unit derived from another monomer excluding acrylonitrile and methacrylonitrile. Examples of the other monomer include: acrylic monomers, such as a (meth)acrylate, a (meth)acrylic acid ester, (meth)acrylamide, ethylene glycol (meth)acrylate, 1,6-hexanediol (meth)acrylate, neopentyl glycol di(meth)acrylate, and glycerin di(meth)acrylate; and conjugated dienes, such as butadiene and isoprene. Two or more of these other monomers may be used in combination.

Herein, the term "(meth)acrylate" refers to any one of "acrylate" and "methacrylate". The term "(meth)acryl" refers to any one of "acryl" and "methacryl".

When the sulfur-containing material of this disclosure includes the sulfur-modified polyacrylonitrile-based compound that is preferred as the sulfur-modified compound, the Raman spectrum of the sulfur-containing material of this disclosure has only to be a Raman spectrum in which the sulfur-containing material of this disclosure can exhibit desired effects, but is preferably a Raman spectrum in which a peak is present within the range of a Raman shift of 1,327 cm⁻¹±10 cm⁻¹ from the viewpoint that the discharge capacity is increased. From the viewpoint that the discharge capacity is increased, in addition to the peak within the range of 1,327 cm⁻¹±10 cm⁻¹ described above, the Raman spectrum of the sulfur-containing material preferably has a peak within at least one range selected from the range of 1,531 cm⁻¹±10 cm⁻¹, the range of 939 cm⁻¹ ±10 cm⁻¹, the range of 479 cm⁻¹±10 cm⁻¹, the range of 377 cm⁻¹±10 cm⁻¹, and the range of 318 cm⁻¹±10 cm⁻¹, more preferably has peaks within at least two ranges selected from the range of 1,531 cm⁻¹±10 cm⁻¹, the range of 939 cm⁻¹±10 cm⁻¹, the range of 479 cm⁻¹±10 cm⁻¹, the range of 377 cm⁻¹±10 cm⁻¹, and the range of 318 cm⁻¹±10 cm⁻¹, and still more preferably has peaks within all of the range of 1,531 cm⁻¹±10 cm⁻¹, the range of 939 cm⁻¹±10 cm⁻¹, the range of 479 cm⁻¹±10 cm⁻¹, the range of 377 cm⁻¹±10 cm⁻¹, and the range of 318 cm⁻¹±10 cm⁻¹.

From the viewpoint that the discharge capacity is increased, in the Raman spectrum of the sulfur-containing material, a ratio (A1/B1) of a peak intensity A1 within the range of 1,327 cm⁻¹±10 cm⁻¹ (difference between the maximum peak within the range of 1,327 cm⁻¹±10 cm⁻¹ and the minimum peak within the range of from 300 cm⁻¹ to 1,800 cm⁻¹) to a peak intensity B1 within the range of 1,531 cm⁻¹±10 cm⁻¹ (difference between the maximum peak within the range of 1,531 cm⁻¹±10 cm⁻¹ and the minimum peak within the range of from 300 cm⁻¹ to 1,800 cm⁻¹) is preferably from 0.30 to 5.0, more preferably from 0.50 to 4.5, still more preferably from 0.70 to 4.0, most preferably from 0.80 to 3.5.

The Raman spectrum described above may be measured with NRS-3100 manufactured by JASCO Corporation (excitation wavelength: λ=532 nm, grating: 600 I/mm, resolution: 1 cm⁻¹, exposure time: 30 seconds, slit width: φ50 µm).

### (1-2) Other Sulfur-modified Acrylic Compound

In this disclosure, the other sulfur-modified acrylic compound is obtained by, for example, a method including heating elemental sulfur and a homopolymer or copolymer of any other acrylic monomer free of a constituent unit derived from acrylonitrile or methacrylonitrile. As the other acrylic monomer, the same monomer as that described as the other acrylic monomer in the section "(1-1) Sulfur-modified Polyacrylonitrile-based Compound" may be used.

### (2) Sulfur-modified Polynuclear Aromatic Compound

For example, a compound in which a sulfur atom and an atom in a polynuclear aromatic compound are covalently bonded to each other may be used as the sulfur-modified polynuclear aromatic compound. The sulfur-modified polynuclear aromatic compound may be manufactured by, for example, heating a mixture of elemental sulfur and a polynuclear aromatic compound serving as an organic compound. Examples of the polynuclear aromatic compound include: a benzene-based aromatic compound, such as naphthalene, anthracene, tetracene, pentacene, phenanthrene, chrysene, picene, pyrene, benzopyrene, perylene, or coronene; an aromatic compound in which part of the benzene-based aromatic compound is a five-membered ring; and a heteroatom-containing heteroaromatic compound in which part of carbon atoms of the aromatic compound are each substituted with sulfur, oxygen, or nitrogen. Further, those polynuclear aromatic compounds may each have a substituent, such as a chain or branched alkyl group having 1 or more and 12 or less carbon atoms, an alkoxyl group, a hydroxyl group, a carboxyl group, an amino group, an aminocarbonyl group, an aminothio group, a mercaptothiocarbonylamino group, or a carboxyalkylcarbonyl group.

### (3) Sulfur-modified Polyether Compound

The same compound as that described in JP 2022-65974 A may be used as the sulfur-modified polyether compound.

### 4. Sulfur-containing Material

In this disclosure, a method of producing the sulfur-containing material is not particularly limited as long as the method provides a material including a sulfur-modified compound, in which the material has a total content of sulfur of 50 mass% or more, and satisfies such a relationship that the peak intensity ratio (A/B) based on the powder X-ray diffraction is 1.5 or less. However, an example thereof may be a method including a heating step of heating a mixture of elemental sulfur and an organic compound. The production method may be a method including a mechanochemical treatment step of subjecting the heat-treated product after the heating step to mechanochemical treatment.

The heating step in the production method is a step of heating the mixture of the elemental sulfur and the organic compound. In the heating step, under a non-oxidizing atmosphere, a temperature of from 200°C to 600°C is preferred, and a temperature of from 250°C to 500°C is more preferred from the viewpoints that the discharge capacity is increased and the safety of the battery is improved.

The mechanochemical treatment in the mechanochemical treatment step refers to treatment of causing a chemical reaction, which utilizes high energy locally generated by mechanical energy, such as friction or compression energy, in a pulverization process of a solid substance. The above-mentioned production method preferably includes the mechanochemical treatment step from the viewpoint that the adjustment of the total content of sulfur and the adjustment of the peak intensity ratio (A/B) are easy. It is assumed that, in the mechanochemical treatment, the ratio of the organic sulfur in the sulfur in the sulfur-containing material is easily increased. More specifically, it is inferred that the mechanochemical treatment can cause the elemental sulfur (e.g., elemental sulfur that has not reacted in the heating step) in the heat-treated product to react with the sulfur-modified compound, and as a result, the ratio of the organic sulfur is easily increased.

In the mechanochemical treatment, for example, mechanical energy, such as impact, friction, compression, or shear energy, may be caused to act on the heat-treated product, or a combination thereof may be caused to act thereon. A known apparatus may be used as an apparatus for performing the mechanochemical treatment, and examples thereof include: a mixing apparatus, such as a ball mill, a vibration mill, a planetary ball mill, a cyclone mill, or a medium stirring-type mill; a pulverizer, such as a ball medium mill, a roller mill, or a mortar; and a jet pulverizer capable of mainly causing a force, such as an impact or grinding force, to act on the heat-treated product.

In this disclosure, the apparatus is preferably a mixing apparatus, such as a ball mill, a vibration mill, a planetary ball mill, a cyclone mill, or a medium stirring-type mill, or a pulverizer, such as a ball medium mill, a roller mill, or a mortar, more preferably a mixing apparatus, such as a ball mill, a vibration mill, a planetary ball mill, or a medium stirring-type mill, still more preferably a ball mill, a vibration mill, a planetary ball mill, or a cyclone mill from the viewpoint that the discharge capacity is further increased.

An environment for performing the mechanochemical treatment may be under an oxidizing atmosphere or under a non-oxidizing atmosphere, but is preferably under a non-oxidizing atmosphere. The oxidizing atmosphere refers to an atmosphere containing an oxidizing gas, and is, for example, an atmosphere containing oxygen, ozone, or nitrogen dioxide. The non-oxidizing atmosphere refers to an atmosphere free of an oxidizing gas, and is, for example, an atmosphere formed of nitrogen or argon.

In this disclosure, the environment for performing the mechanochemical treatment is preferably under a non-oxidizing atmosphere formed of nitrogen or argon, more preferably under a non-oxidizing atmosphere formed of nitrogen from the viewpoints that the discharge capacity is increased and the safety of the battery is improved.

The production method may be a method including any other step except the heating step and the mechanochemical treatment step. An example of the other step may be a sulfur content adjustment step of adjusting an elemental sulfur content of the heat-treated product obtained in the heating step, which is performed between the heating step and the mechanochemical treatment step.

In the sulfur content adjustment step, the elemental sulfur may be additionally supplied to the heat-treated product to increase the total content of sulfur in the heat-treated product to be used in the mechanochemical treatment step, or the elemental sulfur may be removed from the heat-treated product so that the content of the elemental sulfur in the heat-treated product to be used in the mechanochemical treatment step is reduced.

### B. Sulfur-containing Battery Material

Next, a sulfur-containing battery material of this disclosure is described.

The sulfur-containing battery material of this disclosure is a sulfur-containing battery material including a sulfur-modified compound, wherein the sulfur-containing battery material has a total content of sulfur of 50 mass% or more, and a ratio (A/B) of a maximum peak intensity (A) at a diffraction angle (2θ) that falls within the range of from 23.0° to 23.4° to a maximum peak intensity (B) at a diffraction angle (2θ) that falls within the range of from 24.8° to 25.2°, the ratio being obtained in powder X-ray diffraction using a CuKα ray, of 1.5 or less (A/B≤1.5).

According to this disclosure, the discharge capacity is increased by using the sulfur-containing battery material for a battery. In addition, the sulfur-containing battery material is excellent in flame retardancy, and hence the safety of the battery can be improved.

The contents with regard to the sulfur-modified compound, the total content of sulfur, and the diffraction peak are the same as the contents described in the above-mentioned section "A. Sulfur-containing Material," and hence descriptions thereof in this section are omitted.

An application of the sulfur-containing battery material of this disclosure is not particularly limited, but the material may be used for an electrode layer of an electrode in a battery, and is particularly useful as an active material for the electrode layer.

In this disclosure, when the sulfur-containing battery material is the active material for the electrode layer in the battery, from the viewpoint that the discharge capacity is increased, the sulfur-containing battery material is preferably an active material in an electrode layer to be used for a secondary battery, more preferably an active material in a positive electrode active material layer, that is, a positive electrode active material to be used for a secondary battery.

The battery and the electrode layer in this disclosure are described in the following sections "C. Electrode" and "D. Battery."

### C. Electrode

An electrode of this disclosure is an electrode including an electrode layer containing the sulfur-containing material described in the above-mentioned section "A. Sulfur-containing Material."

According to this disclosure, when the electrode is used for a battery, the discharge capacity is increased and the safety of the battery can be improved.

### 1. Electrode Layer

In this disclosure, the "electrode layer" refers to an electrode layer containing the sulfur-containing material or the sulfur-containing battery material. In addition, herein, when the electrode is a positive electrode, the electrode layer is sometimes referred to as "positive electrode active material layer," and when the electrode is a negative electrode, the electrode layer is sometimes referred to as "negative electrode active material layer." The thickness of the electrode layer may be generally from 1 µm to 1,000 µm.

In this disclosure, the content of the sulfur-containing material or the sulfur-containing battery material in 100 parts by mass of the electrode layer is preferably from 75 parts by mass to 99.5 parts by mass, more preferably from 80 parts by mass to 99 parts by mass, still more preferably from 85 parts by mass to 98 parts by mass from the viewpoints that the materials effectively function as active materials, the discharge capacity is increased, and the safety of the battery can be improved.

The electrode layer is an electrode layer containing the sulfur-containing material or the sulfur-containing battery material, and may contain any other component as required.

When the electrode layer is used as the positive electrode active material layer, examples of the other component include a binder and a conductive assistant, and an active material other than the sulfur-containing material and the sulfur-containing battery material, a viscosity modifier, a reinforcing material, an antioxidant, or the like may be incorporated as required.

When the electrode layer is used as the negative electrode active material layer, examples of the other component include a binder and a conductive assistant, and an active material other than the sulfur-containing material and the sulfur-containing battery material, a viscosity modifier, a reinforcing material, an antioxidant, or the like may be incorporated as required.

A binder known as a binder for an electrode layer may be used as the binder. Examples of the binder include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylene-propylene-diene rubber, a fluororubber, a styrene-acrylic acid ester copolymer, an ethylene-vinyl alcohol copolymer, an acrylonitrile butadiene rubber, a styrene-isoprene rubber, polymethyl methacrylate, polyacrylate, polyvinyl alcohol, polyvinyl ether, carboxymethyl cellulose, sodium carboxymethyl cellulose, methyl cellulose, a cellulose nanofiber, polyethylene oxide, starch, polyvinylpyrrolidone, polyvinyl chloride, and polyacrylic acid. The binders may be used alone or in combination thereof. Of those, an aqueous binder is preferred, and a styrene-butadiene rubber, sodium carboxymethyl cellulose, and polyacrylic acid are each more preferred from the viewpoints of its low environmental load and excellent binding property.

The content of the binder in the electrode layer is preferably from 1 part by mass to 30 parts by mass, more preferably from 1 part by mass to 20 parts by mass with respect to 100 parts by mass of the sulfur-containing material or the sulfur-containing battery material in the electrode layer from the viewpoint that the discharge capacity is further increased.

A conductive assistant known as a conductive assistant for an electrode layer may be used as the conductive assistant. Examples of the conductive assistant include: carbon materials, such as natural graphite, artificial graphite, carbon black, ketjen black, acetylene black, channel black, furnace black, lamp black, thermal black, a carbon nanotube, a vapor grown carbon fiber (VGCF), graphene, fullerene, and needle coke; metal powders, such as aluminum powder, nickel powder, and titanium powder; conductive metal oxides, such as zinc oxide and titanium oxide; and sulfides, such as La₂S₃, Sm₂S₃, Ce₂S₃, and TiS₂. The conductive assistants may be used alone or in combination thereof.

The average particle diameter of the conductive assistant is preferably from 0.0001 µm to 100 µm, more preferably from 0.01 µm to 50 µm from the viewpoint that the discharge capacity is increased. In this disclosure, the "average particle diameter" refers to a 50% particle diameter measured by a laser diffraction light scattering method. In the laser diffraction light scattering method, the particle diameter is a diameter on a volume basis, and a secondary particle diameter of a measurement object is measured. When the average particle diameter is measured by the laser diffraction light scattering method, the measurement object is dispersed in a dispersing medium such as water and then measured.

The content of the conductive assistant in the electrode layer is preferably from 0.1 part by mass to 50 parts by mass, more preferably from 0.5 part by mass to 20 parts by mass, still more preferably from 1.0 part by mass to 10 parts by mass, most preferably from 2.0 parts by mass to 8.0 parts by mass with respect to 100 parts by mass of the sulfur-containing material or the sulfur-containing battery material in the electrode layer from the viewpoint that the discharge capacity is increased.

Materials known as active materials, such as a positive electrode active material and a negative electrode active material described in the section "D. Battery" to be described later may each be used as the active material other than the sulfur-containing material and the sulfur-containing battery material (hereinafter sometimes referred to as "other active material").

A viscosity modifier known as a viscosity modifier for an electrode layer may be used as the viscosity modifier. Examples of the viscosity modifier include: a cellulose-based polymer, such as carboxymethyl cellulose, methyl cellulose, or hydroxypropyl cellulose, and an ammonium salt and alkali metal salt thereof; (modified) poly(meth)acrylic acid, and an ammonium salt and alkali metal salt thereof; polyvinyl alcohols, such as (modified) polyvinyl alcohol, a copolymer of acrylic acid or an acrylic acid salt and vinyl alcohol, and a copolymer of maleic anhydride or maleic acid or fumaric acid and vinyl alcohol; polyethylene glycol, polyethylene oxide, polyvinylpyrrolidone, modified polyacrylic acid, oxidized starch, phosphorylated starch, casein, various modified starches, a cellulose nanofiber, and a hydrogenated acrylonitrile-butadiene copolymer. Those viscosity modifiers may each also be used as a dispersant.

A reinforcing material known as a reinforcing material for an electrode layer may be used as the reinforcing material. Examples of the reinforcing material include various inorganic and organic fillers each having a spherical, plate-like, rod-like, or fibrous shape.

An antioxidant known as an antioxidant for an electrode layer may be used as the antioxidant. Examples of the antioxidant include a phenol compound, a hydroquinone compound, an organic phosphorus compound, a sulfur compound, a phenylenediamine compound, and a polymer-type phenol compound.

A method of forming the electrode layer has only to be a method capable of forming the electrode layer, and an example thereof is a method including applying a composition for forming an electrode layer containing the sulfur-containing material or the sulfur-containing battery material, any other component to be incorporated as required, and a solvent, and then removing the solvent from the coating film by drying.

Examples of the solvent may include propylene carbonate, ethylene carbonate, diethyl carbonate, dimethyl carbonate, ethylmethyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, tetrahydrofuran, dimethyl sulfoxide, sulfolane, γ-butyrolactone, water, and an alcohol. The usage amount of the solvent may be adjusted in accordance with an application method. For example, in the case of a doctor blade method, the usage amount of the solvent is preferably from 20 parts by mass to 300 parts by mass, more preferably from 30 parts by mass to 200 parts by mass with respect to 100 parts by mass of the total amount of the sulfur-containing material or the sulfur-containing battery material, the binder, and the conductive assistant from the viewpoint that the production is easy.

The composition for forming an electrode layer may contain any other component in addition to the above-mentioned components. Examples of the other component include a viscosity modifier, a reinforcing material, and an antioxidant.

A method of preparing the composition for forming an electrode layer is not particularly limited, but may be, for example, a method including using an ordinary ball mill, a sand mill, a bead mill, a pigment disperser, a mortar machine, an ultrasonic disperser, a homogenizer, a planetary centrifugal mixer, a planetary mixer, FILMIX, DESPA, or JETPASTER.

The application method is not particularly limited, and various methods, such as a die coater method, a comma coater method, a curtain coater method, a spray coater method, a gravure coater method, a flexo coater method, a knife coater method, a doctor blade method, a reverse roll method, a brush coating method, and a dip method, may each be used. Of those, a die coater method, a doctor blade method, a knife coater method, and a comma coater method are preferred from the viewpoint that a satisfactory surface state of the coating film can be achieved in accordance with the physical properties such as viscosity of the composition for forming an electrode layer and the drying property thereof.

A drying removal method is not particularly limited, and heating, decompression, and a method including a combination thereof may each be used. A heating temperature may be from 40°C to 200°C. A heating furnace, an infrared heating furnace, a vacuum oven, or the like may be used as an apparatus for the heating or the decompression.

The drying volatilizes a volatile component such as the solvent to form the electrode layer. After that, the electrode layer may be subjected to press processing as required. As a method for the press processing, there are given, for example, a mold press method and a roll press method.

### 2. Electrode

The electrode of this disclosure includes the electrode layer, and may have any other configuration as required. An example of the other configuration is a current collector.

A conductive material, such as titanium, a titanium alloy, aluminum, an aluminum alloy, copper, nickel, stainless steel, nickel-plated steel, or a conductive resin, is used as the current collector. The surfaces of those conductive materials may each be coated with carbon. The current collector has a foil shape, a sheet shape, a mesh shape, a porous shape, or the like. Of those options, aluminum is preferred, and aluminum foil is more preferred from the viewpoints of conductivity and cost. When the current collector has a foil shape, its thickness may be generally from 1 µm to 100 µm from the viewpoints that the discharge capacity is further increased and the production is easy.

The application of the electrode of this disclosure is not particularly limited, but an example thereof may be a battery. Examples of the battery include a primary battery and a secondary battery. Examples of the secondary battery include a lithium ion secondary battery, a sodium ion secondary battery, a potassium ion secondary battery, a magnesium ion secondary battery, a calcium ion secondary battery, and an aluminum ion secondary battery. That is, a lithium sulfur secondary battery, a sodium sulfur secondary battery, a potassium sulfur secondary battery, a magnesium sulfur secondary battery, a calcium sulfur secondary battery, and an aluminum sulfur secondary battery may also be adopted.

The application of the electrode of this disclosure is preferably an electrode of a secondary battery, more preferably an electrode of a lithium ion secondary battery from the viewpoint of practicability. The electrode of this disclosure may be used as any one of a positive electrode and a negative electrode, but is preferably used as the positive electrode from the viewpoints that the discharge capacity is further increased and the production can be easily performed.

When the electrode is used as the electrode of the lithium ion secondary battery, predoping treatment of inserting lithium may be performed in advance. A lithium predoping method has only to follow a known method, and examples thereof include: an electrolysis doping method in which a half cell is assembled by using metal lithium as a counter electrode, and the electrode is electrochemically doped with lithium; and a diffusion doping method in which metal lithium foil is bonded to an electrode, and then the electrode is left in a liquid electrolyte and doped with lithium through utilization of diffusion of lithium into the electrode.

In addition, when the electrode is used as the electrode of the sodium ion secondary battery, predoping treatment of inserting sodium may be performed in advance. A sodium predoping method has only to follow a known method, and for example, the above-mentioned doping methods may each be used.

In this disclosure, the electrode may be subjected to press processing as required. As a method for the press processing, there are given, for example, a mold press method and a roll press method.

### D. Battery

### 1. Electrode

The battery of this disclosure includes the electrode described in the section "C. Electrode," and may have any other configuration as required.

According to the battery of this disclosure, the discharge capacity is increased and the cycle characteristic is improved, and the safety can be improved.

### 2. Other Configuration

Examples of the other configuration include a counter electrode to be used in combination with the above-mentioned electrode, an electrolyte, and a separator.

### (1) Counter Electrode

The counter electrode is an electrode to be used in combination with the above-mentioned electrode. When the above-mentioned electrode is a positive electrode, the counter electrode is a negative electrode. When the above-mentioned electrode is a negative electrode, the counter electrode is a positive electrode.

The positive electrode and the negative electrode, each of which is used as the counter electrode for the above-mentioned electrode, are separately described below.

### (1-1) Negative Electrode

A negative electrode including a negative electrode active material layer may be used as the negative electrode to be used as the counter electrode.

A negative electrode active material layer containing at least a known active material (hereinafter sometimes referred to as "negative electrode active material") may be used as the negative electrode active material layer.

In the case of the lithium ion secondary battery, examples of the negative electrode active material include natural graphite, artificial graphite, non-graphitizable carbon, graphitizable carbon, lithium, a lithium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as LiVO₂, Li₂VO₄, and Li₄Ti₅O₁₂. The negative electrode active materials may be used alone or in combination thereof.

In the case of the sodium ion secondary battery, the negative electrode active material free of a lithium atom or the negative electrode active material in which a lithium atom is replaced with a sodium atom among the above-mentioned negative electrode active materials to be used in the lithium ion secondary battery may be used. When the negative electrode active material is lithium or a lithium alloy, or sodium or a sodium alloy, the negative electrode active material in itself may be used as an electrode without use of the current collector. In addition, potassium, magnesium, calcium, aluminum, zinc, or the like may be used as the other negative electrode active material.

The negative electrode active material layer contains the negative electrode active material, and may contain, for example, a binder or a conductive assistant as required.

The same binder and conductive assistant as those described in the section "C. Electrode" may be used as the binder and the conductive assistant to be used in the negative electrode active material layer, and hence descriptions thereof in this section are omitted.

### (1-2) Positive Electrode

A positive electrode including a positive electrode active material layer may be used as the positive electrode to be used as the counter electrode.

A positive electrode active material layer containing at least a known active material (hereinafter sometimes referred to as "positive electrode active material") may be used as the positive electrode active material layer.

Examples of the positive electrode active material include a composite oxide of lithium and a transition metal, a lithium-containing transition metal phosphate compound, and a lithium-containing silicate compound. The positive electrode active materials may be used alone or in combination thereof.

A transition metal in the composite oxide of lithium and a transition metal is, for example, vanadium, titanium, chromium, manganese, iron, cobalt, nickel, or copper. Specific examples of the composite oxide of lithium and a transition metal include: composite oxides of lithium and cobalt such as LiCoO₂; composite oxides of lithium and nickel such as LiNiO₂; composite oxides of lithium and manganese, such as LiMnO₂, LiMn₂O₄, and Li₂MnO₃; and the composite oxides of lithium and transition metals whose primary transition metal atoms are partially substituted with other metals, such as aluminum, titanium, vanadium, chromium, manganese, iron, cobalt, lithium, nickel, copper, zinc, magnesium, gallium, and zirconium. Specific examples of the composite oxides of lithium and transition metals whose primary transition metal atoms are partially substituted with other metals include Li_{1.1}Mn_{1.8}Mg_{0.1}O₄, Li_{1.1}Mn_{1.85}Al_{0.05}O₄, LiNi_{0.5}Co_{0.2}Mn_{0.3}O₂, LiNi_{0.8}Co_{0.1}Mn_{0.1}O₂, LiNi_{0.5}Mn_{0.5}O₂, LiNi_{0.80}Co_{0.17}Al_{0.03}O₂, LiNi_{0.80}Co_{0.15}Al_{0.05}O₂, Li(Ni_{1/3}CO_{1/3}Mn_{1/3})O₂, LiNi_{0.6}CO_{0.2}Mn_{0.2}O₂, LiMn_{1.8}Al_{0.2}O₄, LiNi_{0.5}Mn_{1.5}O₄, and Li₂MnO₃-LiMO₂ (M=Co, Ni, or Mn).

A transition metal in the lithium-containing transition metal phosphate compound is, for example, vanadium, titanium, manganese, iron, cobalt, or nickel. Specific examples of the lithium-containing transition metal phosphate compound include: iron phosphate compounds, such as LiFePO₄ and LiMnₓFe₁₋ₓPO₄ (0<x<1); iron sulfate compounds such as LiFeSO₄F, cobalt phosphate compounds such as LiCoPO₄; the lithium-containing transition metal phosphate compounds whose primary transition metal atoms are partially substituted with other metals, such as aluminum, titanium, vanadium, chromium, manganese, iron, cobalt, lithium, nickel, copper, zinc, magnesium, gallium, zirconium, and niobium; and vanadium phosphate compounds such as Li₃V₂(PO₄)₃.

An example of the lithium-containing silicate compound is Li₂FeSiO₄.

The positive electrode active material layer contains the known active material described above, and may contain, for example, a binder or a conductive assistant as required.

The same binder and conductive assistant as those described in the section "C. Electrode" may be used as the binder and the conductive assistant to be used in the positive electrode active material layer, and hence descriptions thereof in this section are omitted.

### (2) Electrolyte

The electrolyte is not particularly limited, and a known electrolyte may be used. Examples of the electrolyte include: a liquid electrolyte obtained by dissolving a supporting electrolyte in an organic solvent; a gel polymer electrolyte in which a supporting electrolyte is dissolved in an organic solvent and gelation is performed with a polymer; a polymer electrolyte which is free of an organic solvent and in which a supporting electrolyte is dispersed in a polymer; and an inorganic solid electrolyte. In addition, the electrolytes may be used in combination thereof.

In this disclosure, the electrolyte is preferably a liquid electrolyte, a polymer electrolyte, or an inorganic solid electrolyte, more preferably a liquid electrolyte from the viewpoints that the discharge capacity is further increased and the production is easy.

In this disclosure, in the case of the lithium ion secondary battery, a hitherto known lithium salt is used as the supporting electrolyte to be used in each of the liquid electrolyte and the gel polymer electrolyte. Examples of the supporting electrolyte include LiPF₆, LiBF₄, LiAsF₆, LiCF₃SO₃, LiCF₃CO₂, LiN(CF₃SO₂)₂, LiN(C₂F₅SO₂)₂, LiN(SO₂F)₂, LiC(CF₃SO₂)₃, LiB(CF₃SO₃)₄, LiB(C₂O₄)₂, LiBF₂(C₂O₄), LiSbF₆, LiSiFs, LiSCN, LiClO₄, LiCl, LiF, LiBr, Lil, LiAlF₄, LiAlCl₄, LiPO₂F₂, and derivatives thereof. Of those, one or more kinds selected from the group consisting of LiPF₆, LiBF₄, LiClO₄, LiAsF₆, LiCF₃SO₃, LiN(CF₃SO₂)₂, LiN(C₂F₅SO₂)₂, LiN(SO₂F)₂, and LiC(CF₃SO₂)₃, and derivatives of LiCF₃SO₃ and derivatives of LiC(CF₃SO₂)₃ are preferably used from the viewpoint that the discharge capacity is further increased.

The content of the supporting electrolyte in the liquid electrolyte or the gel polymer electrolyte is preferably from 0.5 mol/L to 7 mol/L, more preferably from 0.8 mol/L to 1.8 mol/L from the viewpoint that the discharge capacity is further increased.

Examples of the supporting electrolyte to be used in the polymer electrolyte in the case of the lithium ion secondary battery include LiN(CF₃SO₂)₂, LiN(C₂F₅SO₂)₂, LiN(SO₂F)₂, LiC(CF₃SO₂)₃, LiB(CF₃SO₃)₄, and LiB(C₂O₄)₂.

In this disclosure, examples of the inorganic solid electrolyte in the case of the lithium ion secondary battery include: phosphoric acid-based materials, such as Li₁₊ₓAₓB₂₋ₓ(PO₄)₃ (A=Al, Ge, Sn, Hf, Zr, Sc, or Y, B=Ti, Ge, or Zn, 0<x<0.5), LiMPO₄ (M=Mn, Fe, Co, or Ni), and Li₃PO₄; composite oxides of lithium, such as Li₃XO₄ (X=As or V), Li₃₊ₓAₓB₁₋ₓO₄ (A=Si, Ge, or Ti, B=P, As, or V, 0<x<0.6), Li₄₊ₓAₓSi₁₋ₓO₄ (when A=B, Al, Ga, Cr, or Fe, 0<x<0.4; when A=Ni or Co, 0<x<0.1), Li_{4-3y}Al_{y}SiO₄ (0<y<0.06), Li_{4-2y}Zn_{y}GeO₄ (0<y<0.25), LiAlO₂, Li₂BO₄, Li₄XO₄ (X=Si, Ge, or Ti), and lithium titanate (LiTiO₂, LiTi₂O₄, Li₄TiO₄, Li₂TiO₃, Li₂Ti₃O₇, or Li₄Ti₅O₁₂); compounds each containing lithium and a halogen, such as LiBr, LiF, LiCl, LiPF₆, and LiBF₄; compounds each containing lithium and nitrogen, such as LiPON, LiN(SO₂CF₃)₂, LiN(SO₂C₂Fs)₂, Li₃N, and LiN(SO₂C₃F₇)₂; crystals each having a perovskite structure having lithium ion conductivity, such as La_{0.55}Li_{0.35}TiO₃, crystals each having a garnet-type structure, such as Li₇-La₃Zr₂O₁₃; glasses, such as 50Li₄SiO₄·50Li₃BO₃₃ and 90Li₃BO₃·10Li₂SO₄; lithium-phosphorus sulfide-based crystals, such as 70Li₂S·30P₂S₅, 75Li₂S·25P₂S₅, Li₆PS₅Cl, Li_{9.54}Si_{1.74}P_{1.44}S_{11.7}Cl_{0.3}, Li₆PS₅P_{1.44}Cₗ₃, Li₁₀GeP₂S₁₂, and Li_{3.25}Ge_{0.25}P_{0.75}S₄; lithium-phosphorus sulfide-based glasses, such as 30Li₂S·26B₂S₃·44LiI, 50Li₂S·17P₂S₅·33LiBH, 50Li₂S·50GeS₂, 63Li₂S·36SiS₂·1Li₃PO₄, 57Li₂S·38SiS₂·5Li₄SiO₄, and 70Li₂S·50GeS₂; and glass ceramics, such as Li₇P₃S₁₁, Li_{3.25}P_{0.95}S₄, Li₁₀GeP₂S₁₂, Li_{9.6}P₃S₁₂, and Li_{9.54}Si_{1.74}P_{1.44}S_{11.7}Cl_{0.3}. The inorganic solid electrolyte may be coated with the gel polymer electrolyte. In addition, when the inorganic solid electrolyte is used, a layer of the gel polymer electrolyte may be arranged between a layer of the inorganic solid electrolyte and an electrode.

In the case of the sodium ion secondary battery, the supporting electrolyte in which a lithium atom is replaced with a sodium atom among the above-mentioned supporting electrolytes in the case of the lithium ion secondary battery has only to be used.

In this disclosure, an organic solvent generally used for a liquid electrolyte may be used as the organic solvent to be used for each of the liquid electrolyte and the gel polymer electrolyte. Specific examples of the organic solvent include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound. Of those, a saturated cyclic carbonate compound, a saturated cyclic ester compound, a sulfoxide compound, a sulfone compound, and an amide compound are preferred, and a saturated cyclic carbonate compound is more preferred from the viewpoints that each of the compounds plays a role in increasing the dielectric constant of the electrolyte by virtue of its high specific dielectric constant, and the discharge capacity is further increased. In addition, of those, a saturated chain carbonate compound, a chain ether compound, a cyclic ether compound, and a saturated chain ester compound are preferred, and a saturated chain carbonate compound is more preferred from the viewpoint that each of the compounds can reduce the viscosity of the electrolyte and can increase the mobility of an electrolyte ion to make battery characteristics such as an output density excellent.

Examples of the saturated cyclic carbonate compound include ethylene carbonate, fluoroethylene carbonate, 1,2-propylene carbonate, 1,3-propylene carbonate, 1,2-butylene carbonate, 1,3-butylene carbonate, and 1,1-dimethylethylene carbonate.

Examples of the saturated cyclic ester compound include γ-butyrolactone, γ-valerolactone, γ-caprolactone, δ-hexanolactone, and δ-octanolactone.

Examples of the sulfoxide compound include dimethyl sulfoxide, diethyl sulfoxide, dipropyl sulfoxide, diphenyl sulfoxide, and thiophene.

Examples of the sulfone compound include dimethylsulfone, diethylsulfone, dipropylsulfone, diphenylsulfone, sulfolane (also called tetramethylene sulfone), 3-methylsulfolane, 3,4-dimethylsulfolane, 3,4-diphenymethylsulfolane, sulfolene, 3-methylsulfolene, 3-ethylsulfolene, and 3-bromomethylsulfolene. Of those, sulfolane and tetramethylsulfolane are preferred from the viewpoint that the discharge capacity is further increased.

Examples of the amide compound include N-methylpyrrolidone, dimethylformamide, and dimethylacetamide.

Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate.

Examples of the chain ether compound and the cyclic ether compound include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, diethylene glycol bis(trifluoroethyl) ether, and glymes. Of those, dioxolane is preferred from the viewpoint that the discharge capacity is further increased.

Examples of the saturated chain ester compound include a monoester compound and a diester compound each having a total of 2 to 8 carbon atoms in a molecule thereof. Specific examples of the saturated chain ester compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Of those, methyl formate, ethyl formate, methyl acetate, ethyl acetate, propyl acetate, isobutyl acetate, butyl acetate, methyl propionate, and ethyl propionate are preferred from the viewpoint that the discharge capacity is further increased.

Examples of the other organic solvent that may be used in the preparation of the electrolyte include acetonitrile, propionitrile, nitromethane, derivatives thereof, and various ionic liquids.

Examples of the polymer to be used in the gel polymer electrolyte include polyethylene oxide, polypropylene oxide, polyvinyl chloride, polyacrylonitrile, polymethyl methacrylate, polyethylene, polyvinylidene fluoride, and polyhexafluoropropylene. The blending ratio of the polymer in the gel polymer electrolyte and a gelation method are not particularly limited, and a known blending ratio and a known gelation method in the art have only to be adopted.

Examples of the polymer to be used in the polymer electrolyte include polyethylene oxide, polypropylene oxide, polystyrenesulfonic acid, and polyvinylidene fluoride. The blending ratio of the polymer in the polymer electrolyte and a compositing method are not particularly limited, and a known blending ratio and a known compositing method in the art have only to be adopted.

For example, to prolong the lifetime of the battery and improve the safety thereof, the electrolyte may further contain any other known additive, such as an electrode film forming agent, an antioxidant, a flame retardant, or an overcharge inhibitor. The content of the other additive is generally from 0.01 part by mass to 10 parts by mass, preferably from 0.1 part by mass to 5 parts by mass with respect to 100 parts by mass of the entirety of the electrolyte from the viewpoint that the discharge capacity is further increased.

### (3) Separator

The separator is not particularly limited as long as lithium ions are allowed to permeate therethrough and the contact between the positive electrode and the negative electrode can be prevented, but for example, a microporous polymer film or a non-woven fabric may be used. Examples of the film include films formed of polymer compounds containing, as main components, for example, any of polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyethers, such as polyethylene oxide and polypropylene oxide, various celluloses, such as carboxymethyl cellulose and hydroxypropyl cellulose, and poly(meth)acrylic acid and various esters thereof, derivatives thereof, and copolymers and mixtures thereof. Those films may each be coated with a ceramic material, such as alumina or silica, magnesium oxide, an aramid resin, or polyvinylidene fluoride.

Those films may be used alone or as a multi-layer film in which the films are laminated on each other. Further, various additives may be used in those films, and the kinds and contents thereof are not particularly limited. Of those films, a film formed of polyethylene, polypropylene, polyvinylidene fluoride, or polysulfone is preferred from the viewpoint that the discharge capacity of the secondary battery is further increased.

When the electrolyte is the polymer electrolyte or the inorganic solid electrolyte, the separator may not be incorporated.

### (4) Others

In this disclosure, the shape of the battery is not particularly limited, and various shapes, such as a coin shape, a cylindrical shape, a rectangular shape, and a laminate shape, may be adopted.

A laminate film or a metal container may be used as an exterior member for the battery. The thickness of the exterior member is generally 0.5 mm or less, preferably 0.3 mm or less. Examples of the shape of the exterior member include a flat shape (thin shape), a rectangular shape, a cylindrical shape, a coin shape, and a button shape.

A multi-layer film including a metal layer between resin films may be used as the laminate film. The metal layer is preferably aluminum foil or aluminum alloy foil for weight saving. For example, a polymer material, such as polypropylene, polyethylene, nylon, or polyethylene terephthalate, may be used as the resin film. The laminate film may be sealed through thermal fusion and formed into the shape of the exterior member.

The metal container may be formed of, for example, stainless steel, aluminum, or an aluminum alloy. The aluminum alloy is preferably an alloy containing an element, such as magnesium, zinc, or silicon. When the content of a transition metal, such as iron, copper, nickel, or chromium, in aluminum or the aluminum alloy is set to 1 mass% or less, the long-term reliability and heat dissipation property of the battery under a high-temperature environment can be dramatically improved.

### 3. Battery

The battery of this disclosure may be any one of a primary battery and a secondary battery, but is preferably a secondary battery because the secondary battery is useful as an in-vehicle battery.

### E. Others

This disclosure includes the following aspects.
[1] A sulfur-containing material including a sulfur-modified compound, wherein the sulfur-containing material has a total content of sulfur of 50 mass% or more, and a ratio (A/B) of a maximum peak intensity (A) at a diffraction angle (2θ) that falls within a range of from 23.0° to 23.4° to a maximum peak intensity (B) at a diffraction angle (2θ) that falls within a range of from 24.8° to 25.2°, the ratio being obtained in powder X-ray diffraction using a CuKα ray, of 1.5 or less (A/B≤1.5).
[2] The sulfur-containing material according to Item [1], wherein the sulfur-modified compound is a sulfur-modified acrylic compound.
[3] A sulfur-containing battery material including a sulfur-modified compound, wherein the sulfur-containing battery material has a total content of sulfur of 50 mass% or more, and a ratio (A/B) of a maximum peak intensity (A) at a diffraction angle (2θ) that falls within a range of from 23.0° to 23.4° to a maximum peak intensity (B) at a diffraction angle (2θ) that falls within a range of from 24.8° to 25.2°, the ratio being obtained in powder X-ray diffraction using a CuKα ray, of 1.5 or less (A/B≤1.5).
[4] The sulfur-containing battery material according to Item [3], wherein the sulfur-modified compound is a sulfur-modified acrylic compound.
[5] An electrode including an electrode layer containing the sulfur-containing material of Item [1] or [2] or the sulfur-containing battery material of Item [3] or [4].
[6] A battery including the electrode of Item [5].
[7] The battery according to Item [6], wherein the electrode is a positive electrode.
[8] The battery according to Item [7], wherein the battery includes a negative electrode formed of lithium.

This disclosure is not limited to the above-mentioned embodiments. The above-mentioned embodiments are illustrative, and any embodiment having substantially the same configuration as that of the technical idea described in Claims and exhibiting an action and effect similar thereto is encompassed in the technical scope of this disclosure.

### Examples

This disclosure is described in more detail below by way of Examples and Comparative Examples. However, this disclosure is by no means limited to the following Examples and the like. "Part(s)" and "%" in Examples are by mass unless otherwise specified.

### [Example 1] Production of Sulfur-containing Material A

First, a heating step was performed by a method in conformity with Production Examples of JP 2013-054957 A. Specifically, 20 g of a mixture obtained by mixing 10 parts by mass of polyacrylonitrile powder (manufactured by Sigma-Aldrich, average particle diameter: 200 µm) and 30 parts by mass of elemental sulfur (manufactured by Sigma-Aldrich, average particle diameter: 200 µm) (hereinafter sometimes referred to as "raw material PAN mixture") was loaded into a bottomed cylindrical glass tube having an outer diameter of 45 mm and a length of 120 mm, and a silicone plug including a gas introduction tube and a gas discharge tube was then installed in an opening of the glass tube. After air in the inside of the glass tube was replaced with nitrogen, a lower portion of the glass tube was inserted in a crucible-type electric furnace, and was heated at 400°C for 1 hour while hydrogen sulfide to be generated was removed by introducing nitrogen from the gas introduction tube. Thus, a heat-treated product 1 was obtained. A sulfur vapor was refluxed by being condensed at an upper portion or a lid portion of the glass tube. The resultant heat-treated product 1 was placed in a glass tube oven at 260°C, and was heated at a pressure reduced to 20 hPa for 3.0 hours so that the elemental sulfur was removed therefrom. Thus, a heat-treated product 2 was obtained.

The total content of sulfur in the heat-treated product 2 was 49 mass%, and the content of the elemental sulfur in the heat-treated product 2 was 0 mass%.

After that, a mechanochemical treatment step was performed. A heat-treated product 3 obtained by adding 30 parts by mass of elemental sulfur (manufactured by Sigma-Aldrich, average particle diameter: 200 µm) to 100 parts by mass of the heat-treated product 2 was prepared so that the peak intensity ratio (A/B) of powder X-ray diffraction shown in Table 1 was achieved. The heat-treated product 3 was subjected to mechanochemical treatment with a planetary ball mill (manufactured by Fritsch, P-7 Classic Line) under an argon atmosphere at a rotation speed of 1,600 rpm for a treatment time of 300 minutes. Thus, a sulfur-containing material A was obtained.

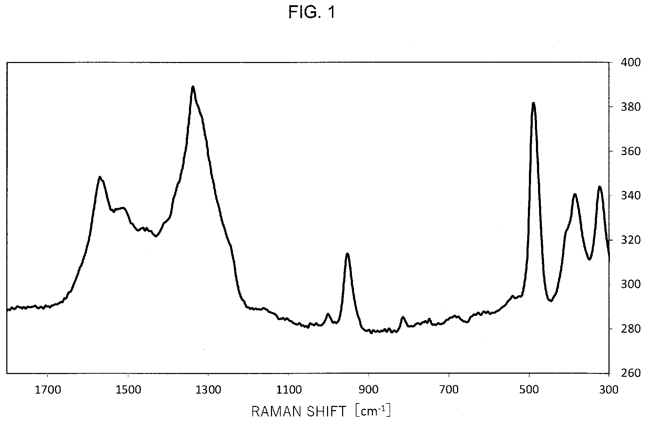

The measurement result of the Raman spectrum of the sulfur-containing material A is shown in FIG. 1. A ratio (A1/B1) of a peak intensity A1 to a peak intensity B1 was determined to be 110.8/56.1=1.98.

### [Example 2] Production of Sulfur-containing Material B

A heat-treated product 4 was obtained in the same manner as in Example 1 except that the time for which the heat-treated product 1 was heated under reduced pressure was changed to 1.5 hours.

The total content of sulfur in the heat-treated product 4 was 60 mass%, and the content of the elemental sulfur in the heat-treated product 4 was 11 mass%.

After that, the heat-treated product 4 was subjected to mechanochemical treatment with a planetary ball mill (manufactured by Fritsch, P-7 Classic Line) under an argon atmosphere at a rotation speed of 1,600 rpm for a treatment time of 300 minutes. Thus, a sulfur-containing material B was obtained.

### [Example 3] Production of Sulfur-containing Material C

After the heat-treated product 2 was obtained in the same manner as in Example 1, a heat-treated product 5 obtained by adding 11 parts by mass of elemental sulfur (manufactured by Sigma-Aldrich, average particle diameter: 200 µm) to 100 parts by mass of the heat-treated product 2 was prepared. The heat-treated product 5 was subjected to mechanochemical treatment with a planetary ball mill (manufactured by Fritsch, P-7 Classic Line) under an argon atmosphere at a rotation speed of 1,600 rpm for a treatment time of 100 minutes. Thus, a sulfur-containing material C was obtained.

### [Comparative Example 1] Production of Sulfur-containing Material "a"

The heat-treated product 1 was placed in a glass tube oven at 260°C, and was heated at a pressure reduced to 20 hPa for 3.0 hours so that the elemental sulfur was removed therefrom. Thus, a sulfur-containing material "a" was obtained.

### [Comparative Example 2] Production of Sulfur-containing Material "b"

A sulfur-containing material "b" was obtained in the same manner as in Comparative Example 1 except that the time for which the heat-treated product 1 was heated under reduced pressure was changed to 1.5 hours.

### [Comparative Example 3] Production of Sulfur-containing Material "c"

After the heat-treated product 2 was obtained in the same manner as in Example 1, a heat-treated product 6 obtained by adding 160 parts by mass of elemental sulfur (manufactured by Sigma-Aldrich, average particle diameter: 200 µm) to 100 parts by mass of the heat-treated product 2 was prepared so that the peak intensity ratio (A/B) of powder X-ray diffraction shown in Table 1 was achieved. The heat-treated product 6 was subjected to mechanochemical treatment with a planetary ball mill (manufactured by Fritsch, P-7 Classic Line) under an argon atmosphere at a rotation speed of 2,000 rpm for a treatment time of 400 minutes. Thus, a sulfur-containing material "c" was obtained.

### [Comparative Example 4] Production of Sulfur-containing Material "d"

A sulfur-containing material "d" was obtained in the same manner as in Comparative Example 1 except that the time for which the heat-treated product 1 was heated under reduced pressure was changed to 2.0 hours.

### [Total Content of Sulfur]

The total content (mass%) of sulfur in the sulfur-containing material obtained in each of Examples and Comparative Examples was calculated from the results of analysis with a CHNS analyzer (manufactured by Elementar Analysensysteme GmbH, model: vario MICRO cube) capable of analyzing sulfur and oxygen. The temperatures of a combustion tube and a reduction tube were set to 1,150°C and 850°C, respectively, and a tin boat was used as a sample container. The results are shown in Tables 1 to 3.

### [Peak Intensity Ratio obtained by Powder X-ray Diffraction]

The sulfur-containing material obtained in each of Examples and Comparative Examples was subjected to X-ray diffraction analysis with a powder X-ray diffraction apparatus (manufactured by Rigaku Corporation, Ultima IV). Measurement conditions were set as follows: a CuKα ray, voltage: 40 kV, current: 40 mA, scan speed: 0.5°/min, sampling: 0.02°, number of scans: once, diffraction angle (2θ): from 10° to 40°.

A ratio of a maximum peak intensity (A) at a diffraction angle (2θ) that falls within the range of from 22.8° to 23.2° to a maximum peak intensity (B) at a diffraction angle (2θ) that falls within the range of from 24.8° to 25.2°, the ratio being obtained from a diffraction pattern obtained in X-ray diffraction, was calculated. The results are shown in Tables 1 to 3.

### [Ignition Test]

4 Grams of the sulfur-containing material obtained in each of Examples and Comparative Examples was weighed, and was placed on a heat insulation plate so as to be hemispherically deposited. Through use of an ignition instrument adjusted so that the length of a diffusion flame became about 7 mm, the flame and the sulfur-containing material were brought into contact with each other for 10 seconds so that a contact area between the flame and the sulfur-containing material and a contact angle therebetween became 2 cm² and about 30°, respectively.

At that time, the material that was not ignited or combusted by the contact for 10 seconds was expressed as "not ignited", and the material that was ignited or combusted was expressed as "ignited". The material that is not ignited can be judged to have high flame retardancy. The results are shown in Tables 1 to 3.

### [Battery Evaluation when Liquid Electrolyte was used]

The sulfur-containing material obtained in each of Examples and Comparative Examples was used to produce a secondary battery.

### (1) Preparation of Positive Electrode

90.0 Parts by mass of the sulfur-containing material serving as an active material for a positive electrode active material layer, 5.0 parts by mass of acetylene black (manufactured by Denka Company Limited) serving as a conductive assistant, 3.0 parts by mass of a styrene-butadiene rubber (aqueous dispersion, manufactured by Zeon Corporation) and 2.0 parts by mass of sodium carboxymethyl cellulose (manufactured by Daicel Fine Chem Ltd.) serving as binders, and 120 parts by mass of water serving as a solvent were mixed with a planetary centrifugal mixer to prepare a composition for forming an electrode layer.

The composition for forming an electrode layer was applied onto carbon-coated aluminum foil (thickness: 20 µm) serving as a current collector by a doctor blade method, and was dried at 90°C for 1 hour. After that, the electrode was cut into a predetermined size and subjected to vacuum drying at 130°C for 2 hours to prepare a disc-shaped positive electrode.

### (2) Preparation of Negative Electrode

Metal lithium having a thickness of 500 µm was cut into a predetermined size to prepare a disc-shaped negative electrode.

### (3) Preparation of Electrolyte

An electrolyte solution 1 was prepared by dissolving LiPF₆ at a concentration of 1.0 mol/L in a mixed solvent formed of 50 vol% of fluoroethylene carbonate and 50 vol% of diethyl carbonate.

An electrolyte solution 2 was prepared by dissolving LiN(CF₃SO₂)₂ at a concentration of 1.0 mol/L in a mixed solvent formed of 50 vol% of dimethoxyethane and 50 vol% of dioxolane.

### (4) Production of Battery

The positive electrode and the negative electrode prepared in advance were held in a case while a glass filter serving as a separator was sandwiched therebetween. After that, the electrolyte solution 1 prepared in advance was injected into the case, and the case was hermetically sealed. Thus, a secondary battery (a coin-shaped battery having a diameter of 20 mm and a thickness of 3.2 mm) was produced. The production procedure of the section "(4) Production of Battery" was performed under an atmosphere having a dew point of -70°C.

Secondary batteries were each produced in the same manner as described above except that the electrolyte solution 1 was changed to the electrolyte solution 2.

### (5) Evaluation Method

The secondary battery produced in the foregoing was placed in a constant-temperature bath at 25°C, and was subjected to 100 cycles of charge and discharge at a charge rate of 0.1C and a discharge rate of 0.1C while a charge final voltage and a discharge final voltage were set to 3.0 V and 1.0 V, respectively. Discharge capacities (mAh/g) were measured in the 10th cycle and the 100th cycle. The results of the discharge capacity (mAh/g) in the 10th cycle are shown in Tables 1 to 3. In this disclosure, "g" in the discharge capacity (mAh/g) refers to the mass of the active material in the positive electrode active material layer.

In addition, a ratio of the discharge capacity in the 100th cycle to the discharge capacity in the 10th cycle was used as a capacity retention rate (%), and a cycle characteristic were evaluated. The results are shown in Tables 1 to 3.

### [Battery Evaluation when Solid Electrolyte was used]

### (1) Production of Battery

50.0 Parts by mass of the sulfur-containing material serving as an electrode active material, 5.0 parts by mass of acetylene black (manufactured by Denka Company Limited) serving as a conductive assistant, and 45.0 parts by mass of LPS (Li₂S:P₂S₅=75:25 (molar ratio)) serving as a solid electrolyte were mixed with a ball mill, and the mixture was molded by press processing to prepare a circular positive electrode active material layer having a diameter of 10 mm.

Next, the LPS was molded by press processing to prepare a circular solid electrolyte layer having a diameter of 10 mm.

After that, SUS foil, the positive electrode active material layer, the solid electrolyte layer, an indium-lithium alloy, and another SUS foil were laminated in the stated order, and the laminate was subjected to press molding at a load of 20 kN, followed by sealing in an all-solid-state battery evaluation cell (manufactured by Hohsen Corp., model: KP-SolidCell). Thus, all-solid-state secondary batteries were each produced. The production procedure of the section "(1) Production of Battery" was performed under an argon atmosphere.

### (2) Evaluation Method

The all-solid-state secondary battery produced in the foregoing was placed in a constant-temperature bath at 60°C, and was subjected to 50 cycles of charge and discharge at a charge rate of 0.05C and a discharge rate of 0.05C while a charge final voltage and a discharge final voltage were set to 2.38 V and 0.38 V, respectively. Discharge capacities (mAh/g) were measured in the 5th cycle and the 50th cycle. The results of the discharge capacity (mAh/g) in the 5th cycle are shown in Tables 1 to 3. In this disclosure, "g" in the discharge capacity (mAh/g) refers to the mass of the active material in the positive electrode active material layer.

In addition, a ratio of the discharge capacity in the 50th cycle to the discharge capacity in the 5th cycle was used as a capacity retention rate (%), and a cycle characteristic was evaluated. The results are shown in Tables 1 to 3.

**Table 1**

| | Example 1 | Example 2 | Example 3 |
|---|---|---|---|
| Sample | Sulfur-containing material A | Sulfur-containing material B | Sulfur-containing material C |
| Total content of sulfur | 60 mass% | 60 mass% | 53 mass% |
| A | 390.0 | 328.1 | 176.7 |
| B | 573.3 | 494.7 | 226.3 |
| A/B | 0.68 | 0.66 | 0.78 |
| Ignition test | Not ignited | Not ignited | Not ignited |
| Discharge capacity in 10th cycle when electrolyte solution 1 was used [mAh/g] | 851 mAh/g | 855 mAh/g | 752 mAh/g |
| Capacity retention rate when electrolyte solution 1 was used (%) | 97% | 97% | 98% |
| Discharge capacity in 10th cycle when electrolyte solution 2 was used [mAh/g] | 846 mAh/g | 847 mAh/g | 750 mAh/g |
| Capacity retention rate when electrolyte solution 2 was used (%) | 95% | 95% | 96% |
| Discharge capacity in 5th cycle when solid electrolyte was used [mAh/g] | 823 mAh/g | 825 mAh/g | 730 mAh/g |
| Capacity retention rate when solid electrolyte was used (%) | 93% | 92% | 93% |

**Table 2**

| | Comparative Example 1 | Comparative Example 2 | Comparative Example 3 |
|---|---|---|---|
| Sample | Sulfur-containing material "a" | Sulfur-containing material "b" | Sulfur-containing material "c" |
| Total content of sulfur | 49 mass% | 60 mass% | 80 mass% |
| A | 301.0 | 930.0 | 756.7 |
| B | 458.8 | 414.0 | 197.1 |
| A/B | 0.66 | 2.25 | 3.84 |
| Ignition test | Not ignited | Ignited | Ignited |
| Discharge capacity in 10th cycle when electrolyte solution 1 was used [mAh/g] | 685 mAh/g | 294 mAh/g | 596 mAh/g |
| Capacity retention rate when electrolyte solution 1 was used (%) | 97% | 51% | 65% |
| Discharge capacity in 10th cycle when electrolyte solution 2 was used [mAh/g] | 671 mAh/g | 657 mAh/g | 817 mAh/g |
| Capacity retention rate when electrolyte solution 2 was used (%) | 94% | 72% | 81% |
| Discharge capacity in 5th cycle when solid electrolyte was used [mAh/g] | 650 mAh/g | 601 mAh/g | 726 mAh/g |
| Capacity retention rate when solid electrolyte was used (%) | 92% | 81% | 85% |

**Table 3**

| | | Comparative Example 4 |
|---|---|---|
| Sulfur-containing material | Sample | Sulfur-containing material "d" |
| | Total content of sulfur | 53 mass% |
| | A | 684.9 |
| | B | 424.0 |
| | A/B | 1.61 |
| | Ignition test | Ignited |
| Discharge capacity in 10th cycle when electrolyte solution 1 was used [mAh/g] | | 501 mAh/g |
| Capacity retention rate when electrolyte solution 1 was used (%) | | 59% |
| Discharge capacity in 10th cycle when electrolyte solution 2 was used [mAh/g] | | 660 mAh/g |
| Capacity retention rate when electrolyte solution 2 was used (%) | | 85% |
| Discharge capacity in 5th cycle when solid electrolyte was used [mAh/g] | | Unmeasured |
| Capacity retention rate when solid electrolyte was used (%) | | Unmeasured |

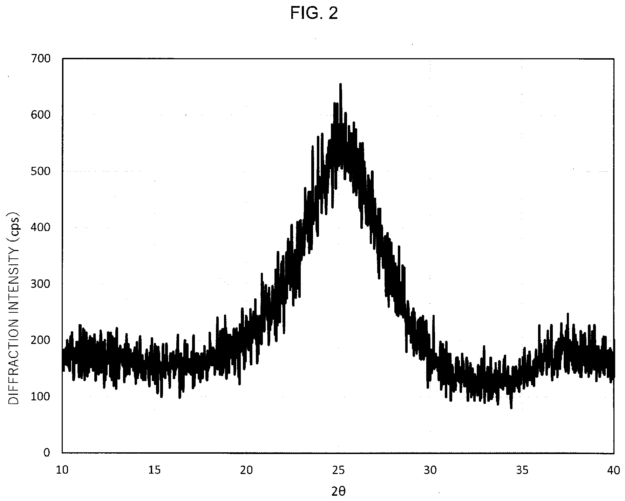

The measurement result of the powder X-ray diffraction of the sulfur-containing material A is shown in FIG. 2. The peak intensity ratio (A/B) of the powder X-ray diffraction of the sulfur-containing material A was determined to be 390/573.3=0.68, and it was able to be recognized that the amount of the elemental sulfur in the sulfur-containing material A was small to such a degree that a reduction in discharge capacity and a reduction in cycle characteristic did not occur.

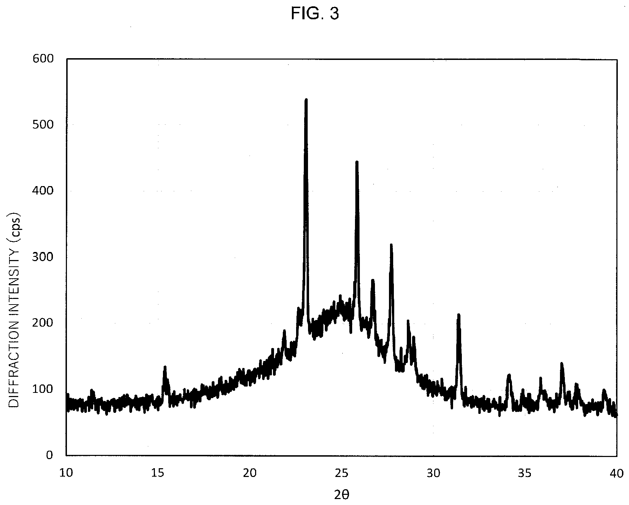

The measurement results of the powder X-ray diffraction of the sulfur-containing material "b" is shown in FIG. 3. The peak intensity ratio (A/B) of the powder X-ray diffraction was determined to be 930.0/414.0=2.25, and it was able to be recognized that the sulfur-containing material "b" contained the elemental sulfur to such a degree that a reduction in discharge capacity and a reduction in cycle characteristic occurred.

From the above-mentioned results, it was found that the flame retardancy of the sulfur-containing material of each of Examples was high, and hence the safety of the battery was able to be improved. In addition, it was found that the battery using the sulfur-containing material of each of Examples had a high discharge capacity. In addition, it was found that the capacity retention rate of the battery using the sulfur-containing material of each of Examples was improved, and hence the battery was excellent in cycle characteristic.

## Claims

1. A sulfur-containing material, comprising a sulfur-modified compound,
wherein the sulfur-containing material has
a total content of sulfur of 50 mass% or more, and
a ratio (A/B) of a maximum peak intensity (A) at a diffraction angle (2θ) that falls within a range of from 23.0° to 23.4° to a maximum peak intensity (B) at a diffraction angle (2θ) that falls within a range of from 24.8° to 25.2°, the ratio being obtained in powder X-ray diffraction using a CuKα ray, of 1.5 or less (A/B≤1.5).

2. The sulfur-containing material according to claim 1, wherein the sulfur-modified compound is a sulfur-modified acrylic compound.

3. A sulfur-containing battery material, comprising a sulfur-modified compound,
wherein the sulfur-containing battery material has
a total content of sulfur of 50 mass% or more, and
a ratio (A/B) of a maximum peak intensity (A) at a diffraction angle (2θ) that falls within a range of from 23.0° to 23.4° to a maximum peak intensity (B) at a diffraction angle (2θ) that falls within a range of from 24.8° to 25.2°, the ratio being obtained in powder X-ray diffraction using a CuKα ray, of 1.5 or less (A/B≤1.5).

4. The sulfur-containing battery material according to claim 3, wherein the sulfur-modified compound is a sulfur-modified acrylic compound.

5. An electrode, comprising an electrode layer containing the sulfur-containing material of claim 1.

6. A battery, comprising the electrode of claim 5.

7. The battery according to claim 6, wherein the electrode is a positive electrode.

8. The battery according to claim 7, wherein the battery comprises a negative electrode formed of lithium.
